# EUROPEAN PATENT APPLICATION

(11) **EP 2 933 935 A1**
(43) Date of publication of application: **21.10.2015**
(21) Application number: 14305546.5
(22) Date of filing: 14.04.2014
(51) Int. Cl.: H04B 10/54

(54) **A method of modulating light in a telecommunication network**

(71) Applicant: ALCATEL LUCENT, 92100 Boulogne-Billancourt (FR)
(72) Inventor: ANTONA, Jean-Christophe, 91620 NOZAY (FR); LAYEC, Patricia, 91620 NOZAY (FR); DE VALICOURT, Guilhem, 91620 NOZAY (FR)
(74) Representative: Novagraaf Technologies

(57) **Abstract**

The invention relates to a method of modulating light in a telecommunication network, the method comprising the step of modulating light with a first intensity modulator (1), the step of modulating light with a second intensity modulator (2), the two modulators (1,2) being applied a mutual angular phasing, the mutual angular phasing being non-orthogonal and non-PI/2-dividable.

## Description

The invention relates to modulation of light in optical telecommunication networks.

Spectrally efficient modulation formats rely on constellations exploiting the whole complex plane such as x-QAM - Quadrature Amplitude Modulation -. They are usually generated using two amplitude modulations in quadrature, or with a combination of phase modulation and intensity modulation. To do so, Mach-Zehnder-type modulators are generally used for high performance systems. Monolithic integration on InP is the way to reduce the cost, power consumption and the footprint of such complex transmitter. However Integration inspired from LiNbO3 architectures shows some limitations in terms of modulation speed, optical losses and power consumption. Inuk Kang has proposed a new way to generate the advanced modulation formats by using short Electro-Absorption Modulators or EAM in an interferometric arrangement, cf. [I. Kang, "Phase-shift-keying and on-off-keying with improved performances using electroabsorption modulators with interferometric effects", Opt. Express, vol. 15, no. 4, pp. 1467-1473, 2007]. Indeed, intensity modulators such as electro-absorption modulators offer some interesting potential in terms of integration as shown in C. Kazmierski, et al, "12.5GB Operation of a Novel Monolithic 1.55µm BPSK Source Based on Prefixed Optical Phase Switching", OFC 2013, Anaheim, USA, paper OW4J8, which can result in the realization of high-bit rate, low-cost transmitters, in particular when including laser and modulators.

One intensity modulator enables to make On-Off Keying, intensity modulation formats. Feeding the modulator with a DAC - digital analogic converter- enables to perform multi-level intensity modulation, but spectral efficiency comes at the expense of noise sensitivity. In order to modulate light along the positive and negative parts of one axis, one needs the combination of two intensity modulators with a phase difference of π. In doing so, modulation formats such as two-level BPSK - Binary Phase Shift Keying - or bipolar multilevel PAM - Pulse Amplitude Modulation - can be generated by driving the modulators with DACs, making an amplitude modulation out of two intensity modulators with a logical differential phase shift of π before summing the outputs. The use of EAMs combined with prefixed optical phase switch has been used to generate 28-Gb/s BPSK, cf. C. Kazmierski, et al, "56Gb/s PDM-BPSK Experiment with a Novel InP-Monolithic Source Based on Prefixed Optical Phase Switching", IPRM 2013 based on this principle.

With a phase sensitive receiver, BPSK enables to improve the noise sensitivity by 3dB with respect to 2-level OOK - On Off Keying -. Moving to 4-level PAM doubles the spectral efficiency, but the noise sensitivity is then degraded by 7dB at constant symbol rate. 80 Gb/s 4-PAM has been demonstrated in C. Kazmierski, et al, "80Gb/s Multi-Level BPSK experiment with an InPMonolithic Source Based on Prefixed Optical Phase Switching", IPRM 2014. In comparison, standard QPSK modulation enables to double the spectral efficiency provided a 3dB increase of noise sensitivity but it usually requires two amplitudes (i.e. positive and negative modulations) in quadrature. In order to achieve this kind of modulation with intensity modulators, a solution consists of using four modulators with phase shifts of 0 and π on the one hand for the modulation of the real axis, and π/2 and 3π/2 on the other hand for the modulation of the imaginary axis. This performance is thus achieved at the expense of four modulators [cf. H. Mardoyan et al, "PIC-to-PIC experiment at 130Gb/s Based on a Monolithic Transmitter Using Switching of Prefixed Optical Phases and a Monolithic Coherent Receiver", Proceedings of OFC 2014, TH5.C.2]. However keeping the number of integrated devices as low as possible into a single chip is important to keep high fabrication yield therefore reducing the cost as well as the footprint.

An alternative would consist in using only two intensity modulators, with a phase shift of π/2. As a result, light is modulated in the quadrant delimited by the positive-x axis and the positive y-axis. Modulating light with two levels per modulator, e.g. 0 and a value a, results in a four-symbol constellation that could be called a 4 Quadrature Intensity Modulation (QIM) . The constellation corresponds to a QPSK (Quadrature Phase Shift Keying) constellation that would be shifted in the quadrant consisting in x≥0 and y≥0. The drawback of such a solution is its poor performance. With this format, the spectral efficiency is the same as standard QPSK or twice BPSK, but with a sensitivity penalty of 6dB / respectively 3dB with respect to BPSK / respectively QPSK. The concept could easily be extended to x-QIM solutions, still with even higher implementation penalties, e.g. 11.5dB penalty for 16QIM with respect to standard QPSK, 4.5dB worse than standard 16QAM.

The aim of the invention is to propose a modulating method and component which allows good or high modulating efficiency, is less expensive than the known methods and devices, has a reduced footprint and can be produced in a high scale industrial process.

This aim is achieved according to the invention by means of a method according to claim 1 and an optical modulating component according to claim 8.

Other aims, features and advantages of the invention will appear throughout the following detailed description, which is made in reference to the figures, among which
- Figure 1 depicts a modulating component according to a first embodiment of the invention.
- Figure 2 is a complex plane illustrating a treatment realized by such modulating component.
- Figures 3a-3c represent examples of intensity modulations according to embodiments of the invention.
- Figure 4 shows evolution of a penalty with angular shift in an embodiment of the invention.
- Figure 5 is a complex plane illustrating a treatment realized by a modulating component according to a second embodiment.

A method is described here which generates modulation formats in the complex plane, through the use of a combination of a limited number of non-orthogonal intensity modulations, typically two or three modulations. The angular shift between two directions of modulations can typically be higher than π/2, between 7π/12 and 11π/12. A particular angular shift of specific interest is 2π/3. The value of the angle is important since it changes the trade-offs between possible average power and minimal distance between two points in the 2D constellation. A particular type of modulation relies in the combination of multilevel intensity modulation with regularly spaced points in both one-dimensional directions, which would have led to QIM constellations being portions of QAM constellations if we had chosen orthogonal modulations.

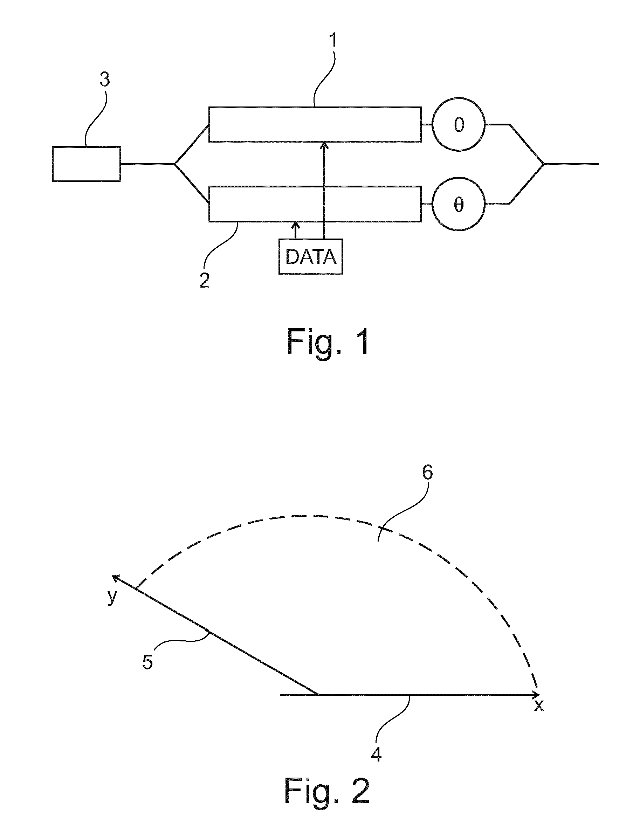

On figure 1 is represented a first embodiment, which consists in a telecommunication network optical modulating component. As represented on figure 1, the first embodiment consists in using two intensity modulators 1 and 2 on which data are provided and a laser 3 and combine the modulations in such a way that their directions are shifted from an angle θ different from π/2 and also from π in which case the resulting modulation format would only exploit one direction in the complex plane. In this case, the treatment is limited to one quadrant of the modulations complex plane. More generally, an angle θ different from π/2 and non π/2-dividable i.e. not dividable by π/2, i.e. not a multiple of π/2, is preferred. Preferably an angle measured in absolute value, i.e. measured by a positive value is preferably chosen between π/2 and π. The absolute value being taken into account, the angle can be positive or negative.

Figure 2 shows the two axes of intensity modulation 4 and 5, angle θ between both directions, and the portion 6 of the complex plane that can be covered with combining those modulations.

One possible implementation involves a Mach-Zehnder interferometer-like structure in order to set the desired angle θ between the two directions of modulation 4 and 5. Each arm of the interferometer comprises at least one intensity modulator 1 and 2, and at least one of the two arms comprises one device providing a phase shift. The difference of the phase shifts between the second and the first arm is equal to the desired angle θ if the signal is recovered at the constructive output port of the Mach-Zehnder structure, equal to and θ±π otherwise.

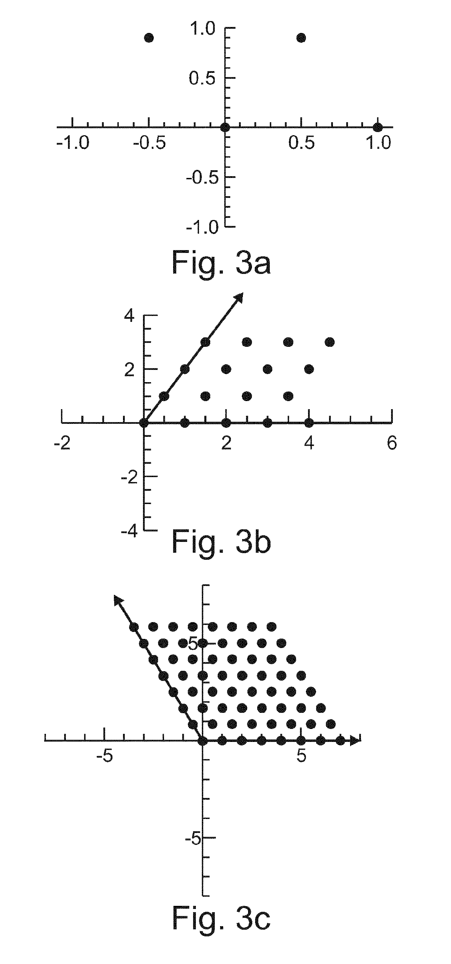

Numerous possibilities are now available to position the constellation points within the above region 6. One example of constellation consists of using multilevel intensity modulation with regularly spaced symbols on both intensity modulations. The resulting constellation looks like a portion of a QAM constellation stretched along one direction. On figures 3a -3c are represented some examples of Non-Quadrature Intensity Modulations - NQIM in the following - with different numbers of symbols and phase shifts, that could be named after: "Angle - Nb symbols NQIM", eg 2π/3-4NQIM for a 4 symbol constellation and an angle of 2π/3. Figure 3a represents a 2π/3-4NQIM, figure 3b represents a 2π/3-64NQIM, figure 3c represents a π/3-16NQIM.

The present system generates modulation format in the complex two-dimensional plane with a combination of pure intensity modulators based on prefixed optical phase switching.

The angle θ plays a role in the performance optimization. Indeed, theoretically, in first approximation, and provided a phase sensitive receiver, the OSNR - Optical Signal-to-Noise Ratio - sensitivity for a given BER - Bit Error Rate - of a modulation format is proportional to the ratio between the average signal power and the square of the minimal distance between two constellation points.

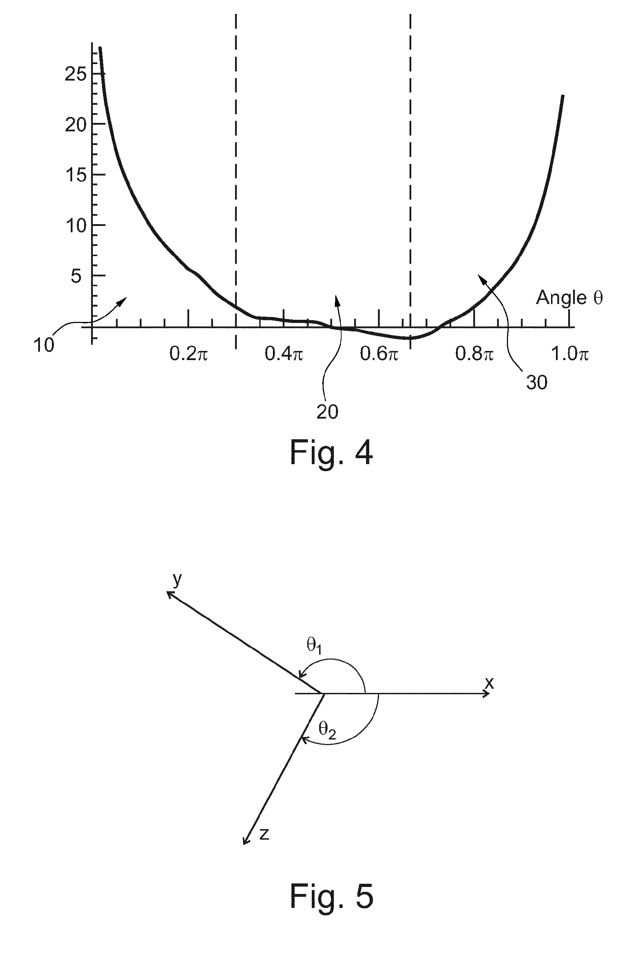

For instance, using this type of NQIM modulations, an optimal angle of 2π/3 can be shown. In doing so, the authorized region in the complex plane is one third of the complex plane, and the tiling of this region is achieved through equilateral triangles. The theoretical OSNR penalty (based on evolution of the average power at given minimum inter-symbol distance) is shown here in Figure 4 for a four-symbol constellation, as a function of angle θ. There are three distinct zones in the penalty vs angle curve. A first zone 10 corresponds to angles below π/3. A second zone 20 corresponds to angles between π/3 and 2π/3, and a third zone 30 corresponds to angles above 2π/3, with a minimum at 2π/3.

To understand the different portions of the curve, one can get back to the symbols of the constellation. Following the non-orthogonal axes of modulations, the coordinates of 00, 10, 01, 11 symbols are (0,0) (a,0), (0,a), (a,a). When projected along usual orthogonal axes of the complex plane, we get: (0,0), (a,0), (a cos(θ), a sin(θ)) and (a+a cos(θ), a sin(θ)), respectively. When increasing the angle θ, the average power, equal to a²+a/2 cos(θ), always decreases, which tends to improve the sensitivity or decrease the penalty. Besides, when the angle is below π/3, the minimum distance between symbols is the distance between symbols 10 and 01. The minimum distance increases from 0, when angle is 0, to value a when angle is π/3. This also results in a decrease of the penalty with increasing angle. At π/3, the minimal distance is the distance between 10 and 01, but also between 00 and 10 or between 00 and 01, ie equal to a. The constellation then takes the shape of a diamond with π/3 acute angle or a juxtaposition of equilateral triangles.

For zone 20 in which angles are comprises between π/3 and 2π/3, the minimum distance is constant and equal to a, i.e. the distance between 00 and 10 or between 00 and 01. The sole impact of the decrease of the average power with increasing angles makes the penalty decrease. At angle equal to 2π/3, distance between 00 and 11 also achieves the minimal distance a and the constellation also takes the shape of a diamond with π/3 acute angle or a juxtaposition of equilateral triangles. For higher values of angle, the minimal distance is the distance between 00 and 11 which decreases from a to 0 when angle grows towards π. As a result, in this region, the penalty increases, despite the average power decrease.

Compared to standard QPSK, the 2π/3 4NQIM presents a penalty of only 1.75dB while requiring only two intensity modulators, to be compared with 3dB penalty using the 4QIM, i.e. π/2 - 4NQIM, or with 4dB penalty with 4 PAM that can be achieved with two modulations shifted by π. With more complex modulations, the benefits of the 2π/3 become even more important with respect to the angle of π/2. With 64 symbols, the OSNR sensitivity is improved by 1.9dB. It is also a possibility that the NQIM format does not contain the (0,0) point which is usually hard to generate and detect. Some other constellations could be considered, such as the ones preferring symbols on a certain number of truncated rings, i.e. truncated because of the angular limitation. Reducing the amount of rings can result in easier convergence of detection algorithms when using a coherent receiver.

According to another embodiment, three intensity modulators are used. This embodiment enables symbols of the constellation to be anywhere and cover the full complex plane, similarly to solutions with four intensity modulators, or with existing IQ - In-phase and Quadrature - modulators composed of two amplitude modulators in quadrature. We rely here on three directions of modulation x,y,z. As represented on figure 5, the y-axis is shifted from the x-axis by the angle θ₁ and the z-axis is shifted by the angle θ₂. θ₂ is potentially different from θ₁. By doing so, the traditional constellations such as x-QAM can also be generated, provided that the transmitter is capable of generating a sufficient number of intensity levels per direction, e.g. 256. One special arrangement assumes θ₁ = θ₂ = 2π/3. This setup is indeed creating a honeycomb structure, which is optimal. For example three axis with an intensity "a" create a regular hexagon of a honeycomb structure. With a sufficient number of intensity levels, one can create the honeycomb, on which it is possible to put symbols at the centers or intersections of the cells.

These embodiments enable to design cost-effective transmitters by optimizing the number of components into a single chip, allowing less modulators, phase shifters and simple MMI - MultiMode Interference - while providing high-performance with only intensity modulators, possibly fully integrated with the single frequency or tunable laser.

These embodiments offer ways to build spectrally efficient modulation formats in the two dimensional complex plane with a reduced number of intensity modulators. Highest performance can be achieved with three modulators separated by 120° angles, while the best existing solution with intensity modulators requires four modulators, hence allowing an additional energy saving. Low cost-medium performance solutions can be achieved with two modulators with angles different from 90°, resulting in an improvement of the OSNR sensitivity of 1.25dB in the case of four symbols and 1.9dB for 64 symbols. The penalties with respect to a classical QPSK or 64 QAM are only 1.7dB and 3.3dB, to be compared with 3dB and 5.2dB penalty with angles of 90°. Very high.

Such intensity modulators are advantageously integrated with lasers so as to constitute low-cost and high-bit rate transmitters for example for metropolitan, short reach or interconnect applications.

The invention allows making cost-effective and spectrally efficient transmitters out of a limited number of intensity modulators and is also advantageous for realizing interfaces comprising intensity modulators integrated with lasers.

## Claims

1. A method of modulating light in a telecommunication network, the method comprising the step of modulating light with a first intensity modulator (1) on a first branch, the step of modulating light with a second intensity modulator (2) on a second branch, the first and the second branch being parallel to each other, the intensity modulators (1,2) being applied a mutual angular phasing (θ), the mutual angular phasing (θ) being non-orthogonal and non-PI/2-dividable.

2. The method according to claim 1, wherein the mutual angular phasing (θ) is strictly comprised between PI/2 and PI in absolute values.

3. The method according to claim 1, wherein the mutual angular phasing (θ) is comprised between 7PI/12 and 3PI/4 in absolute values.

4. The method according to claim 1, wherein the mutual angular phasing (θ) is sensibly equal to 2PI/3 in absolute value.

5. The method according to anyone of the preceding claims, wherein it comprises the step of modulating light with a third intensity modulator.

6. The method according to the preceding claim, wherein the third intensity modulator is applied an angular phasing (θ₂) in reference to the first intensity modulator (1) which is comprised between 7PI/12 and 3PI/4 in absolute values.

7. The method according to the preceding claim, wherein the third intensity modulator is applied an angular phasing (θ₂) in reference to the first intensity modulator (1) which is sensibly equal to 2PI/3 in absolute values.

8. An optical modulating component (1,2) comprising a first branch on which a first intensity modulator (1) is placed and a second branch on which a second intensity modulator (2) is placed, the first and the second branch being parallel to each other, the intensity modulators (1,2) being applied a mutual angular phasing (θ), the mutual angular phasing (θ) being non-orthogonal and non-PI/2-dividable.

9. An optical modulating component (1,2) according to claim 8, wherein it comprises an integrated circuit in which the first and the second intensity modulators (1,2) are integrated.

10. An optical modulating component (1,2) according to claim 8 or claim 9, wherein the mutual angular phasing (θ) is comprised between PI/2 and PI in absolute values.

11. An optical modulating component (1,2) according to anyone of claims 8 to 10, wherein the mutual angular phasing (θ) is comprised between 7PI/12 and 3PI/4 in absolute values.

12. An optical modulating component (1,2) according to anyone of claims 8 to 11, wherein the mutual angular phasing (θ) is sensibly equal to 2PI/3 in absolute value.

13. An optical modulating component (1,2) according to anyone of claims 8 to 12, wherein it comprises a third intensity modulator.

14. An optical modulating component (1,2) according to anyone of claims 8 to 13, wherein it comprises a laser component.

15. A telecommunication network comprising an optical modulating component (1,2) according to anyone of claims 8 to 14.

## Amended claims

### Amended claims in accordance with Rule 137(2) EPC.

1. A method of modulating light in a telecommunication network, the method comprising the step of modulating light with a first intensity modulator (1) on a first branch, the step of modulating light with a second intensity modulator (2) on a second branch, the first and the second branch being parallel to each other, the intensity modulators (1,2) being applied a mutual angular phase shift (0), the method being **characterized in that** the mutual angular phase shift (θ) being non-orthogonal and non-PI/2-dividable.

2. The method according to claim 1, wherein the mutual angular phase shift (θ) is strictly comprised between PI/2 and PI in absolute values.

3. The method according to claim 1, wherein the mutual angular phase shift (θ) is comprised between 7PI/12 and 3PI/4 in absolute values.

4. The method according to claim 1, wherein the mutual angular phase shift (θ) is sensibly equal to 2PI/3 in absolute value.

5. The method according to anyone of the preceding claims, wherein it comprises the step of modulating light with a third intensity modulator.

6. The method according to the preceding claim, wherein the third intensity modulator is applied an angular phase shift (0₂) in reference to the first intensity modulator (1) which is comprised between 7PI/12 and 3PI/4 in absolute values.

7. The method according to the preceding claim, wherein the third intensity modulator is applied an angular phase shift (θ₂) in reference to the first intensity modulator (1) which is sensibly equal to 2PI/3 in absolute values.

8. An optical modulating component (1,2) comprising a first branch on which a first intensity modulator (1) is placed and a second branch on which a second intensity modulator (2) is placed, the first and the second branch being parallel to each other, the intensity modulators (1,2) being applied a mutual angular phase shift (θ), the optical modulating component (1, 2) being **characterized in that** the mutual angular phase shift (θ) being non-orthogonal and non-PI/2-dividable.

9. An optical modulating component (1,2) according to claim 8, wherein it comprises an integrated circuit in which the first and the second intensity modulators (1,2) are integrated.

10. An optical modulating component (1,2) according to claim 8 or claim 9, wherein the mutual angular phase shift (θ) is strictly comprised between PI/2 and PI in absolute values.

11. An optical modulating component (1,2) according to anyone of claims 8 to 10, wherein the mutual angular phase shift (θ) is comprised between 7PI/12 and 3PI/4 in absolute values.

12. An optical modulating component (1,2) according to anyone of claims 8 to 11, wherein the mutual angular phase shift (θ) is sensibly equal to 2PI/3 in absolute value.

13. An optical modulating component (1,2) according to anyone of claims 8 to 12, wherein it comprises a third intensity modulator.

14. An optical modulating component (1,2) according to anyone of claims 8 to 13, wherein it comprises a laser component.

15. A telecommunication network comprising an optical modulating component (1,2) according to anyone of claims 8 to 14.
